# EUROPÄISCHE PATENTSCHRIFT

(11) **EP 2 653 330 B1**
(45) Veröffentlichungstag und Bekanntmachung des Hinweises auf die Patenterteilung: **08.10.2014**
(21) Anmeldenummer: 13001429.3
(22) Anmeldetag: 20.03.2013
(51) Int. Cl.: B60H 1/22

(54) **Zusatzheizeinrichtung und Klimatisierungseinrichtung für ein Kraftfahrzeug**
Additional heating device and air conditioner for a motor vehicle
Dispositif de chauffage auxiliaire et dispositif de climatisation pour un véhicule automobile

(30) Priorität: 21.04.2012 DE 102012008029
(43) Veröffentlichungstag der Anmeldung: 23.10.2013
(73) Patentinhaber: Volkswagen Aktiengesellschaft, 38440 Wolfsburg (DE)
(72) Erfinder: Hebel, Björn, DE - 38108 Braunschweig (DE); Spieckermann, Rainer, DE - 38440 Wolfsburg (DE); Richter, Jörg, DE - 38518 Gifhorn (DE); Hammer, Harald, DE - 38524 Sassenburg (DE)

(56) Entgegenhaltungen:
- EP-A1- 1 516 761
- DE-A1-102007 039 423
- US-A1- 2010 187 211

## Beschreibung

Die Erfindung bezieht sich auf eine Zusatzheizeinrichtung für ein Kraftfahrzeug, umfassend einen Infrarot-Strahler, einen Temperatursensor und einen mit dem Infrarot-Strahler und dem Temperatursensor wirkverbundenen Controller zur Ansteuerung des Infrarot-Strahlers in Abhängigkeit von einer von dem Temperatursensor gemessenen Temperatur.

Die Erfindung bezieht sich weiter auf eine Klimatisierungseinrichtung für ein Kraftfahrzeug, umfassend eine Primärheizeinrichtung, wenigstens eine Zusatzheizeinrichtung und ein Steuergerät zur koordinierten Ansteuerung der Primärheizeinrichtung und der Zusatzheizeinrichtung.

Derartige Zusatzheizeinrichtungen und Klimatisierungseinrichtungen sind bekannt aus der US 2010/0187211 A1. Diese Druckschrift offenbart eine herkömmliche Klimatisierungseinrichtung für ein Kraftfahrzeug, die durch eine Infrarot-Zusatzheizung im Fußraumbereich ergänzt ist. Hierzu ist im Fußraum ein Infrarot-Strahler aus Carbon angeordnet, dessen Emissions-Raumwinkel auf die Füße des Fahrers bzw. Beifahrers gerichtet ist. Der Infrarot-Strahler ist mit einem zentralen Klima-Steuergerät verbunden, welches sowohl die Primärheizung als auch die Infrarot-Zusatzheizung ansteuert und die Aktivitäten beider koordiniert. Um eine übermäßige Bestrahlung und Aufheizung der Füße von Fahrer bzw. Beifahrer zu vermeiden, ist jedem Infrarot-Strahler wenigstens ein Temperatursensor zugeordnet, mit dessen Messwert die Temperatur der bestrahlten Zieloberfläche, d.h. insbesondere der Füße von Fahrer bzw. Beifahrer, abgeschätzt werden soll. Der oder die Temperatursensoren sind separat mit dem Klimasteuergerät verbunden. Bei dem einzigen, in der genannten Druckschrift explizit offenbarten Ausführungsbeispiel ist der Temperatursensor im Infrarot-Strahlengang zwischen dem Infrarot-Strahler und der Zieloberfläche angeordnet. Der Temperatursensor erfasst somit die vom Infrarot-Strahler abgegebene Infrarot-Strahlung und lässt vom Steuergerät in Kenntnis der geometrischen Anordnung und insbesondere der Abstände zwischen Infrarot-Strahler, Temperatursensor und Zieloberfläche die mutmaßliche Temperatur der Zieloberfläche abschätzen. Nachteilig hierbei sind eine sehr ungenaue Temperaturabschätzung, die komplizierte und aufwendige Montage der Einzelelemente und die Notwendigkeit der Steuerungsabstimmung auf die jeweils speziell realisierte geometrische Anordnung.

Aus der US 2011/0127246 A1 ist eine Weiterentwicklung des gleichen Systems bekannt, bei dem die Infrarot-Strahler gepulst betrieben werden.

Aus der DE 10 2008 063 666 A1 ist eine vergleichbare Zusatzheizeinrichtung für den Nackenbereich von Fahrer bzw. Beifahrer bekannt.

Aus der DE 198 08 571 B4 ist eine mittelbare Infrarot-Heizung bekannt. Hierbei wird ein nicht direkt in den Fahrgastraum eines Kraftfahrzeugs strahlender Infrarot-Strahler mit dem Temperierluftstrom der Primärheizeinrichtung gekühlt und die so erwähnte Temperierluft in den Fahrgastraum geblasen.

Aus der EP 2 230 112 A1 ist eine weitere, noch stärker mittelbare Infrarot-Heizung bekannt. Hier ist der Infrarot-Strahler auf einen im Temperierluftstrom der Primärheizeinrichtung angeordneten Absorber aus Infrarot-Strahlung absorbierendem Material gerichtet, welcher vom Temperierluftstrom überstrichen wird und diesen dadurch erwärmt. Die so erwärmte Temperierluft wird in den Fahrgastraum geblasen.

Es ist die Aufgabe der vorliegenden Erfindung, eine gattungsgemäße Zusatzheizeinrichtung derart weiterzubilden, dass ihre Integration in eine Klimatisierungseinrichtung für ein Kraftfahrzeug vereinfacht wird.

Diese Aufgabe wird in Verbindung mit den Merkmalen des Oberbegriffs von Anspruch 1 dadurch gelöst, dass der mit einem Reflektor hinterlegte Infrarot-Strahler, der Temperatursensor und der Controller in einem gemeinsamen Gehäuse integriert sind, welches ein dem Reflektor andererseits des Infrarot-Strahlers gegenüberliegendes, für Inftarot-Strahlung durchlässiges Fenster und eine mit dem Infrarot-Strahler, dem Temperatursensor und dem Controller verbundene Daten- und Spannungsversorgungs-Steckerschnittstelle aufweist.

Eine Klimatisierungseinrichtung für ein Kraftfahrzeug, die von den Vorteilen einer erfindungsgemäßen Zusatzheizeinrichtung profitiert, ist Gegenstand von Anspruch 7 und zeichnet sich in Zusammenhang mit den Merkmalen dessen Oberbegriffs insbesondere dadurch aus, dass die wenigstens eine Zusatzheizeinrichtung der vorliegenden Erfindung ausgebildet ist, wobei ihr Controller in datenübertragender Verbindung mit dem Steuergerät steht.

Bevorzugte Ausführungsformen der Erfindung sind Gegenstand der abhängigen Ansprüche.

Kerngedanke der Erfindung ist der modulare Aufbau, bei dem die gesamte Zusatzheizeinrichtung als ein einziges Bauteil oder Modul ausgebildet ist und in einfacher Weise mit einem Klimasteuergerät gekoppelt werden kann. Ein solches Zusatzheizmodul eignet sich sehr gut zur Nachrüstung sowie zum einfachen Modell-Upgrade. Wesentlicher Bestandteil des Moduls ist ein eigener Controller, dem die Ansteuerung des Infrarot-Strahlers in Abhängigkeit von Messdaten des Temperatursensors, der ebenfalls Bestandteil des Moduls ist, überlassen ist. Diese Aufgabe muss daher nicht von dem Klima-Steuergerät übernommen werden, welches nun nur noch das Zusatzheizmodul als Ganzes anzusteuern hat. Entsprechend einfacher kann die Programmierung des Klima-Steuergerätes ausfallen, sodass das optionale Hinzufügen oder Weglassen der Zusatzheizeinrichtung, beispielsweise in Abhängigkeit von den vom Kunden gewünschten Ausstattungsmerkmalen eines Kraftfahrzeugs leichter erfolgen kann.

Bei einer bevorzugten Ausführungsform der Erfindung ist vorgesehen, dass der Temperatursensor als ein gegen direkte Abstrahlung von dem Infrarot-Strahler abgeschirmter Infrarot-Strahlungssensor ausgebildet ist, dessen Detektions-Raumwinkel den Emissions-Raumwinkel des Infrarot-Strahlers überlappt. Dies führt zu einer deutlichen Verbesserung der Temperatursteuerung des Infrarot-Strahlers. Auf diese Weise muss nämlich die Temperatur der Zieloberfläche nicht aufwendig und in Abhängigkeit von der speziellen Geometrie der Elementenanordnung abgeschätzt werden. Vielmehr wird eine direkte Messung der Zieloberflächentemperatur möglich. Bekanntermaßen emittiert jeder Körper ein seiner Temperatur entsprechendes elektromagnetisches Spektrum. Im Bereich der für die Fahrzeugklimatisierung relevanten Temperaturen liegt das Emissionsmaximum dieses Spektrums im Infrarot-Bereich. Daher emittiert auch die vom Infrarot-Strahler bestrahlte Zieloberfläche (längerwellige) Infrarot-Strahlung. Diese wird von dem Infrarot-Strahlungssensor gemessen und an den Controller weitergeleitet, sodass dieser die Temperatur der Zieloberfläche bestimmen kann. Selbstverständlich ist es hierzu erforderlich, dass der Infrarot-Strahlungssensor nicht direkt von dem Infrarot-Strahler bestrahlt wird. Vielmehr ist es erforderlich, dass die wesentlichen Teile der Zieloberfläche sowohl innerhalb des Emissions-Raumwinkels des Infrarot-Strahlers als auch im Detektion-Raumwinkel des Infrarot-Sensors liegen.

Bevorzugt weist der Infrarot-Strahler als sein Infrarot-Strahlung emittierendes Element einen Keramikemitter auf. Keramikemitter sind deutlich bruchsicherer als bekannte Quarzstrahler, womit das erfindungsgemäße Zusatzheizmodul besonders robust ausfällt. Zudem kann hierdurch, wie bei einer bevorzugten Ausführungsform vorgesehen, der Infrarot-Strahler ausgelegt sein, ein Infrarot-Spektrum mit einem Emissionsmaximum im Wellenlängenbereich zwischen 2000 Nanometer und 8000 Nanometer zu emittieren. Dies liegt innerhalb der als IR-C (>3500 Nanometer) und IR-B (>1400 Nanometer) bezeichneten Infrarot-Wellenlängenbänder. Insbesondere das IR-C-Band wird vom menschlichen Körper nicht als direkte Strahlungswärme empfunden und lässt sich daher leichter in die Gesamtsteuerung der Fahrzeugklimatisierung integrieren. Das IR-B-Band hat hingegen den Vorteil, von Wassermolekülen absorbiert zu werden und eignet sich daher besonders gut für Trocknungsvorgänge, z.B. zur Schuhtrocknung, wenn, wie bei einer bevorzugten Ausführungsform wenigstens eine erfindungsgemäße Zusatzheizeinrichtung im Fußraum des Kraftfahrzeugs angeordnet und der Emissions-Raumwinkels ihres Infrarot-Strahlers in das Fußrauminnere gerichtet ist.

Bevorzugt ist das Fenster des Gehäuses, durch welches die Infrarot-Strahlung emittiert wird, als ein mit einem Gitter überspannter Ausschnitt aus einer Wandung des Gehäuses ausgebildet. Dies ist besonders einfach und kostengünstig, gleichwohl jedoch unter Sicherheitsaspekten ohne weiteres ausreichend. Die Maschengröße des Gitters wird bevorzugt so gewählt, dass größere, brennbare Materialien, wie Staubflocken, Insekten, Blätter etc. nicht eindringen können.

Um die Kommunikation zwischen dem erfindungsgemäßen Zusatzheizmodul, insbesondere dessen Controller und dem Klima-Steuergerät zu erleichtern, ist bevorzugt vorgesehen, dass die Steckerschnittstelle eine zum Anschluss eines standardisierten Bussystems ausgelegte Kontaktgruppe aufweist. Beispielsweise kann der LIN-Busstandard realisiert sein. Auch die Spannungsversorgungsanschlüsse des Infrarot-Strahlers und des Temperatursensors können mit der Datenschnittstelle zusammengefasst werden, sodass sämtliche erforderlichen Anschlüsse in einem einzigen Stecker zusammengefasst sein können.

Weitere Merkmale und Vorteile der Erfindung ergeben sich aus der nachfolgenden, speziellen Beschreibung und den Zeichnungen.

Es zeigen:
- Figur 1: eine schematische Darstellung eines erfindungsgemäßen Zusatzheizmoduls,
- Figur 2: eine schematische Skizze eines Fußraumes eines Kraftfahrzeugs mit erfindungsgemäßen Zusatzheizmodul.

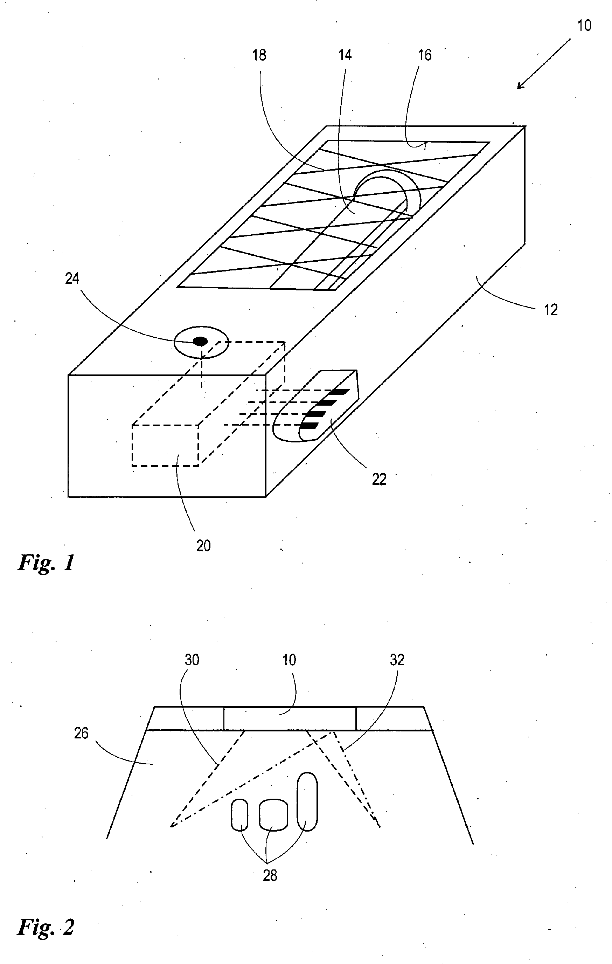

Figur 1 zeigt eine erfindungsgemäße Zusatzheizeinrichtung, nämlich ein Zusatzheizmodul 10. Das Modul weist ein Gehäuse 12 aus Metall und/oder hitzebeständigem Kunststoff und/oder Keramik auf, welches in Figur 1 vereinfacht als Quader dargestellt ist, jedoch grundsätzlich beliebige Formen, insbesondere in Anpassung an vorgesehene Montagepositionen aufweisen kann. Im Inneren des Gehäuses 12 ist ein Infrarot-Strahler 14 mechanisch fixiert und elektrisch kontaktiert. Das Gehäuse 12 weist einen Ausschnitt 16 auf, durch welchen vom Infrarot-Strahler abgegebene Infrarot-Strahlung entweichen kann. Der Ausschnitt 16 kann mit einer für Infrarot-Strahlung transparenten Platte verschlossen sein. Bei der in Figur 1 gezeigten Ausführungsform ist hingegen ein Gitterschutz 18 vorgesehen. Die Gittermaschen sind in Figur 1 aus Gründen der besseren Veranschaulichung darunterliegender Elemente sehr groß gezeichnet. In der Realität wird regelmäßig eine kleinere Maschengröße zu wählen sein. In Figur 1 nicht erkennbar ist ein auf der anderen Seite des Infrarot-Strahlers 14 dem Ausschnitt 16 gegenüberliegender Reflektor. Dieser kann von der Innenwand des Gehäuses 12 selbst gebildet oder als separates Element ausgestaltet sein. Er dient dazu, vom Infrarot-Strahler 14 "nach hinten" abgestrahlte Infrarot-Strahlung umzulenken und durch den Ausschnitt 16 zu senden.

In einem benachbarten Gehäuseabschnitt, der durch eine nicht dargestellte Wärmeschutzwand von dem den Infrarot-Strahler 14 enthaltenden Gehäuseabschnitt getrennt ist, liegt ein (gestrichelt dargestellter) Controller 20, der elektrisch und in datenübertragender Weise mit einer Steckerbuchse 22 an der Außenwandung des Gehäuses 12 verbunden ist. Einzelne Kontaktstifte der Steckerbuchse 22 dienen einzeln oder gruppiert der Kontaktierung mit einer Spannungsquelle bzw. einem LIN-Bus. Weiter umfasst das Zusatzheizmodul 10 einen Infrarot-Strahlungssensor 24, der auf der Oberseite, d.h. auf der den Ausschnitt 16 tragenden Seite des Gehäuses 12 angeordnet und in etwa in die gleiche Richtung ausgerichtet ist, in die der Infrarot-Strahler 14 abstrahlt. Der Infrarot-Strahlungssensor 24 ist mit dem Controller 20 verbunden.

Figur 2 zeigt eine stark schematisierte Skizze eines Fußraumes 26 eines Kraftfahrzeugs zur Illustration einer möglichen Anbringung des Zusatzheizmoduls 10 im Rahmen einer Fahrzeug-Klimatisierungseinrichtung. Das Zusatzheizmodul 10 ist im Dach des Fußraums 26 integriert, auf dessen Boden die Pedale 28 angeordnet sind, auf denen sich bei Betrieb die Füße des Fahrers befinden. Gestrichelt dargestellt ist der Emissions-Raumwinkel 30 des Infrarot-Strahlers 14; strichpunktiert dargestellt ist der diesen überlappende Detektionsraumwinkel 32 des Infrarot-Strahlungssensors 24.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten an die Hand gegeben.

### BEZUGSZEICHENLISTE

- 10: Zusatzheizeinrichtung/Zusatzheizmodul
- 12: Gehäuse
- 14: Infrarot-Strahler
- 16: Ausschnitt in 12
- 18: Schutzgitter
- 20: Controller
- 22: Stecker
- 24: Infrarot-Strahlungssensor
- 26: Fußraum
- 28: Pedale
- 30: Emissions-Raumwinkel von 14
- 32: Detektions-Raumwinkel von 24

## Patentansprüche

1. Zusatzheizeinrichtung für ein Kraftfahrzeug, umfassend einen Infrarot-Strahler (14), einen Temperatursensor (24) und einen mit dem Infrarot-Strahler (14) und dem Temperatursensor wirkverbundenen Controller (20) zur Ansteuerung des Infrarot-Strahlers (14) in Abhängigkeit von einer von dem Temperatursensor (24) gemessenen Temperatur,
**dadurch gekennzeichnet,**
**dass** der mit einem Reflektor hinterlegte Infrarot-Strahler (14), der Temperatursensor (24) und der Controller (20) in einem gemeinsamen Gehäuse (12) integriert sind, welches ein dem Reflektor andererseits des Infrarot-Strahlers (14) gegenüberliegendes, für Infrarot-Strahlung durchlässiges Fenster (16) und eine mit dem Infrarot-Strahler (14), dem Temperatursensor (24) und dem Controller (20) verbundene Daten- und Spannungsversorgungs-Steckerschnittstelle (22) aufweist.

2. Zusatzheizeinrichtung nach Anspruch 1,
**dadurch gekennzeichnet,**
**dass** der Temperatursensor als ein gegen direkte Abstrahlung von dem Infrarot-Strahler (14) abgeschirmter Infrarot-Strahlungssensor (24) ausgebildet ist, dessen Detektions-Raumwinkel (32) den Emissions-Raumwinkel (30) des Infrarot-Strahlers (14) überlappt.

3. Zusatzheizeinrichtung nach einem der vorangehenden Ansprüche,
**dadurch gekennzeichnet,**
**dass** der Infrarot-Strahler (14) als sein Infrarot-Strahlung emittierendes Element einen Keramikemitter aufweist.

4. Zusatzheizeinrichtung nach einem der vorangehenden Ansprüche,
**dadurch gekennzeichnet,**
**dass** der Infrarot-Strahler (14) ausgelegt ist, ein Infrarot-Spektrum mit einem Emissionsmaximum im Wellenlängenbereich zwischen 2000 nm und 8000 nm zu emittieren.

5. Zusatzheizeinrichtung nach einem der vorangehenden Ansprüche,
**dadurch gekennzeichnet,**
**dass** das Fenster des Gehäuses als ein mit einem Metallgitter (18) überspannter Ausschnitt (16) aus einer Wandung des Gehäuses ausgebildet ist.

6. Zusatzheizeinrichtung nach einem der vorangehenden Ansprüche,
**dadurch gekennzeichnet,**
**dass** die Steckerschnittstelle (22) eine zum Anschluss eines standardisierten Bussystems ausgelegte Kontaktgruppe aufweist.

7. Klimatisierungseinrichtung für ein Kraftfahrzeug, umfassend eine Primärheizeinrichtung, wenigstens eine Zusatzheizeinrichtung (10) und ein Steuergerät zur koordinierten Ansteuerung der Primärheizeinrichtung und der Zusatzheizeinrichtung (10),
**dadurch gekennzeichnet,**
**dass** die wenigstens eine Zusatzheizeinrichtung (10) gemäß einem der vorangehenden Ansprüche ausgebildet ist, wobei ihr Controller (20) in datenübertragender Verbindung mit dem Steuergerät steht.

8. Klimatisierungseinrichtung nach Anspruch 7,
**dadurch gekennzeichnet,**
**dass** die wenigstens eine Zusatzheizeinrichtung (10) im Fußraum (26) des Kraftfahrzeugs angeordnet und der Emissions-Raumwinkel (30) ihres Infrarot-Strahlers in das Fußrauminnere gerichtet ist.

## Claims

1. Additional heating device for a motor vehicle, comprising an infrared radiator (14), a temperature sensor (24) and a controller (20) which is operatively connected to the infrared radiator (14) and the temperature sensor and has the purpose of actuating the infrared radiator (14) as a function of a temperature measured by the temperature sensor (24),
**characterized**
**in that** the infrared radiator (14) which is stored with a reflector, the temperature sensor (24) and the controller (20) are integrated in a common housing (12) which has a window (16) which lies opposite the reflector on the other side of infrared radiator (14) and is permeable to infrared radiation, and a data and a voltage supply plug interface (22) which is connected to the infrared radiator (14), the temperature sensor (24) and the controller (20).

2. Additional heating device according to Claim 1,
**characterized**
**in that** the temperature sensor is embodied as an infrared radiation sensor (24) which is screened from direct radiation by the infrared radiator (14) and whose detection solid angle (32) overlaps the emission solid angle (30) of the infrared radiator (14).

3. Additional heating device according to one of the preceding claims,
**characterized**
**in that** the infrared radiator (14) has a ceramic emitter as its infrared radiation-emitting element.

4. Additional heating device according to one of the preceding claims,
**characterized**
**in that** the infrared radiator (14) is configured to emit an infrared spectrum with an emission maximum in the wavelength range between 2000 nm and 8000 nm.

5. Additional heating device according to one of the preceding claims,
**characterized**
**in that** the window of the housing is embodied as a cutout (16) from a wall of the housing, said cutout (16) being spanned by a metal grill (18).

6. Additional heating device according to one of the preceding claims,
**characterized**
**in that** the plug interface (22) has a contact group configured for connecting a standardized bus system.

7. Air-conditioning device for a motor vehicle, comprising a primary heating device, at least one additional heating device (10) and a control unit for the coordinated actuation of the primary heating device and the additional heating device (10),
**characterized**
**in that** the at least one additional heating device (10) is designed according to one of the preceding claims, wherein its controller (20) has a data-transmitting connection to the control unit.

8. Air-conditioning device according to Claim 7,
**characterized**
**in that** the at least one additional heating device (10) is arranged in the footwell (26) of the motor vehicle, and the emission solid angle (30) of its infrared radiator is directed into the interior of the footwell.

## Revendications

1. Dispositif de chauffage auxiliaire pour véhicule automobile, comprenant un émetteur infrarouge (14), un capteur de température (24) et un dispositif de commande (20) fonctionnellement connecté à l'émetteur infrarouge (14) et au capteur de température pour commander l'émetteur infrarouge (14) en fonction d'une température mesurée par le capteur de température (24),
**caractérisé en ce que** l'émetteur infrarouge (14), équipé d'un réflecteur, le capteur de température (24) et le dispositif de commande (20) sont intégrés à un boîtier commun (12) qui comprend une fenêtre (16) transparente au rayonnement infrarouge disposée à l'opposé du réflecteur, de l'autre côté de l'émetteur infrarouge (14), et une interface de connexion de données et d'alimentation en tension (22) connectée à l'émetteur infrarouge (14), au capteur de température (24) et au dispositif de commande (20).

2. Dispositif de chauffage auxiliaire selon la revendication 1, **caractérisé en ce que** le capteur de température est réalisé sous la forme d'un capteur de rayonnement infrarouge (24) protégé contre le rayonnement direct de l'émetteur infrarouge (14), dont l'angle solide de détection (32) chevauche l'angle solide d'émission (30) de l'émetteur infrarouge (14).

3. Dispositif de chauffage auxiliaire selon l'une quelconque des revendications précédentes, **caractérisé en ce que** l'émetteur infrarouge (14) comprend en tant qu'élément émetteur de rayonnement infrarouge de celui-ci un émetteur en céramique.

4. Dispositif de chauffage auxiliaire selon l'une quelconque des revendications précédentes, **caractérisé en ce que** l'émetteur infrarouge (14) est conçu pour émettre un spectre infrarouge comprenant un maximum d'émission dans la région de longueurs d'onde comprise entre 2000 nm et 8000 nm.

5. Dispositif de chauffage auxiliaire selon l'une quelconque des revendications précédentes, **caractérisé en ce que** la fenêtre du boîtier est réalisée sous la forme d'une découpure (16) ménagée dans une paroi du boîtier, recouverte par une grille métallique (18).

6. Dispositif de chauffage auxiliaire selon l'une quelconque des revendications précédentes, **caractérisé en ce que** l'interface de connexion (22) comprend un groupe de contacts conçus pour le raccordement d'un système de bus normalisé.

7. Dispositif de climatisation pour véhicule automobile, comprenant un dispositif de chauffage primaire, au moins un dispositif de chauffage auxiliaire (10) et un appareil de commande destiné à coordonner la commande du dispositif de chauffage primaire et du dispositif de chauffage auxiliaire (10), **caractérisé en ce que** l'au moins un dispositif de chauffage auxiliaire (10) est réalisé selon l'une quelconque des revendications précédentes, dans lequel son dispositif de commande (20) est connecté par transmission de données à l'appareil de commande.

8. Dispositif de climatisation selon la revendication 7, **caractérisé en ce que** l'au moins un dispositif de chauffage auxiliaire (10) se trouve dans l'espace destiné aux jambes (26) du véhicule automobile et **en ce que** l'angle solide d'émission (30) de son émetteur infrarouge est dirigé vers l'intérieur de l'espace destiné aux jambes.
